# EUROPÄISCHE PATENTSCHRIFT

(11) **EP 3 430 366 B1**
(45) Veröffentlichungstag und Bekanntmachung des Hinweises auf die Patenterteilung: **01.04.2020**
(21) Anmeldenummer: 17704223.1
(22) Anmeldetag: 08.02.2017
(51) Int. Cl.: G01M 3/02, G01M 3/32

(54) **VERFAHREN UND VORRICHTUNG ZUR DICHTIGKEITSPRÜFUNG EINER VERBRENNUNGSKRAFTMASCHINE**
METHOD AND DEVICE FOR LEAK TESTING AN INTERNAL COMBUSTION ENGINE
PROCÉDÉ ET DISPOSITIF DE VÉRIFICATION DE L'ÉTANCHÉITÉ D'UN MOTEUR À COMBUSTION INTERNE

(30) Priorität: 18.03.2016 DE 102016204502
(43) Veröffentlichungstag der Anmeldung: 23.01.2019
(73) Patentinhaber: Bayerische Motoren Werke Aktiengesellschaft, 80809 München (DE)
(72) Erfinder: BANSCHBACH, Tim, 80939 München (DE)
(86) Internationale Anmeldenummer: PCT/EP2017/052682
(87) Internationale Veröffentlichungsnummer: WO 2017/157583

(56) Entgegenhaltungen:
- DE-B3-102013 209 786

## Beschreibung

Die Erfindung betrifft eine Dichtigkeitsprüfung der Brennräume einer Verbrennungskraftmaschine. Diese Dichtigkeitsprüfung findet bevorzugt bei einer Montage der Verbrennungskraftmaschine statt.

Bei Verbrennungskraftmaschinen für Kraftfahrzeuge, Arbeitsmaschinen, Luftfahrzeuge und ähnliche Anwendungen kann es erforderlich sein, die Verbrennungskraftmaschine nach deren Montage auf Dichtigkeit zu prüfen. Eine Undichtigkeit der Brennräume der Verbrennungskraftmaschine kann die von der Verbrennungskraftmaschine erzeugbare Leistung reduzieren oder dazu führen, dass Schadstoffe (insbesondere ohne Nachbehandlung) unkontrolliert in die Umgebung gelangen können. Eine Undichtigkeit im Bereich der Ansaugleitung kann auch dazu führen, dass ungefilterte Luft in die Brennräume der Verbrennungskraftmaschine gesaugt wird. Hierdurch kann es zu Beschädigungen von Bauteilen der Verbrennungskraftmaschine kommen. Ebenso kann eine Undichtigkeit in ölführenden Leitungen oder deren Verbindungen, im Betrieb zu einem thermischen Ereignis führen, welches den Betrieb der Verbrennungskraftmaschine beeinträchtigt.

In bekannten Verfahren wird für eine solche Dichtigkeitsprüfung ein Massenstrommessverfahren angewendet. Üblicherweise wird die Verbrennungskraftmaschine als Ganzes auf Dichtigkeit geprüft. Bei einem solchen Verfahren werden üblicherweise sämtliche miteinander verbundene Bauteile und Leitungen erfasst, die Reinluft bzw. Abgas führen. Dazu zählen insbesondere Ansaugleitungen, die Brennräume der Verbrennungskraftmaschine, Abgasleitungen und Abgasreinigungskomponenten. Insbesondere werden in solchen Verfahren Bauteile wie z. B. Abgasturbolader zusammen mit weiteren Abgasleitungen und Bauteilen der Verbrennungskraftmaschine dichtigkeitsgeprüft. Hierdurch werden üblicherweise Maßnahmen zur Abdichtung des Abgasturboladers notwendig. Beispielsweise wird für solche Verfahren der Dichtigkeitsprüfung eine zusätzliche Planbearbeitung von Flanschen an einem Abgaskrümmer und von Zylinderkopfflächen notwendig, weil diese Komponenten eine erhöhte Ebenheit und damit eine erhöhte Dichtigkeit benötigen, damit die Messung durchgeführt werden kann. Außerdem werden für solche Verfahren regelmäßig beschichtete Dichtungen an einem Abgaskrümmer notwendig. Weiterhin sind gegebenenfalls spezielle Dichtungen zwischen einem Lagerstuhlgehäuse und einem Verdichter oder Turbinengehäuse notwendig.

All diese Maßnahmen zur Abdichtung des Abgasturboladers dienen letztlich vor allem der Durchführbarkeit der Dichtigkeitsprüfung der Verbrennungskraftmaschine. Im späteren Betrieb der Verbrennungskraftmaschine (beispielsweise im Kraftfahrzeug) ist insbesondere die Dichtigkeit eines Abgasturboladers (in dem bei der Dichtigkeitsprüfung geforderten Maße) nicht erforderlich. Daher sind diese oben beschriebenen zusätzlichen Maßnahmen zur Abdichtung des Abgasturboladers für die Verwendung der Verbrennungskraftmaschine im Kraftfahrzeug nicht notwendig und verursachen zusätzliche Kosten.

Von dem Ergebnis der Dichtigkeitsprüfung der Verbrennungskraftmaschine wird üblicherweise eine Aussage über den korrekten Verbau und die korrekte Funktion sämtlicher zu prüfender Bauteile und Verbindungen abgeleitet. Eine Undichtigkeit, die für die richtige Funktionsweise der Verbrennungskraftmaschine nicht entscheidend ist, kann dazu führen, dass die geprüfte Verbrennungskraftmaschine als nicht korrekt eingestuft wird. Die Tatsache, dass die Ursache der Undichtigkeit im Abgasturbolader (und damit in einem Bauteil, in dem eine Undichtigkeit nicht relevant ist) liegt, kann bei den beschriebenen Verfahren nur durch zusätzliche (aufwändige) Maßnahmen erkannt werden.

Aus der DE 10 2013 209 786 B3 ist ein Verfahren zum Prüfen der Dichtheit eines einen Abgasturbolader aufweisenden Verbrennungsmotors vor dessen erstmaliger Inbetriebnahme bekannt.

Hiervon ausgehend ist es Aufgabe der hier vorliegenden Erfindung, die im Zusammenhang mit dem Stand der Technik geschilderten technischen Probleme zu lösen bzw. zumindest zu lindern. Es soll insbesondere ein Verfahren zur Dichtigkeitsprüfung einer Verbrennungskraftmaschine vorgestellt werden, das räumlich auf einen Teilbereich der Verbrennungskraftmaschine begrenzt ist.

Diese Aufgaben werden gelöst mit einem Verfahren gemäß den Merkmalen des Patentanspruchs 1 und mit einer Verbrennungskraftmaschine gemäß den Merkmalen des Patentanspruchs 7. Weitere vorteilhafte Ausgestaltungen des Verfahrens und der Verbrennungskraftmaschine sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Das erfindungsgemäße Verfahren zur Dichtigkeitsprüfung einer Verbrennungskraftmaschine mit einem Innenraum umfassend mindestens einen Brennraum und mindestens einen Abgasauslass weist zumindest die folgenden Schritte auf:
a) Verschließen des mindestens einen Abgasauslasses mit einem Dichtungselement,
b) Beaufschlagen des Innenraums mit einem Druck zur Durchführung einer Dichtigkeitsprüfung der Verbrennungskraftmaschine, und
c) Öffnen des Abgasauslasses zur Inbetriebnahme der Verbrennungskraftmaschine.

Das Verfahren zeichnet sich dadurch aus, dass das Verschließen des Abgasauslasses in Schritt a) durch Einlegen des Dichtungselementes zwischen einem Block der Verbrennungskraftmaschine und einem Abgaskrümmer bei einer Montage der Verbrennungskraftmaschine durchgeführt wird.

Die Verbrennungskraftmaschine ist bevorzugt ein Verbrennungsmotor wie z. B. ein Ottomotor oder ein Dieselmotor eines Kraftfahrzeugs. Die Verbrennungskraftmaschine hat vorzugsweise einen oder mehrere Zylinder, in denen Kraftstoff mit Luft verbrannt werden kann. Jeder dieser Zylinder bildet einen der Brennräume.

Der Innenraum umfasst die Gesamtheit von Hohlräumen in Bauteilen und Leitungen in der Verbrennungskraftmaschine, die mit dem mindestens einen Brennraum verbunden sind oder beim Betrieb der Verbrennungskraftmaschine zumindest zeitweise mit dem mindestens einen Brennraum verbunden werden können (z. B. durch Öffnen von Ventilen). Insbesondere stellt der mindestens eine Brennraum selbst einen Teil des Innenraums dar. Weiterhin können insbesondere Zu- und Ableitungen für Reinluft und/oder für Abgasteile des Innenraums darstellten. Solche Zuleitungen sind beispielsweise auch Ansaugleitungen bzw. Ansaugkrümmer. Solche Ableitungen sind beispielsweise auch Abgasleitungen bzw. Abgaskrümmer. Auch Bauteile, wie z.B. Abgasturbolader, Luftfilter, Abgasnachbehandlungsvorrichtungen (wie z.B. Katalysatoren oder Partikelfilter) oder Ladeluft- oder Abgaskühler können (zumindest teilweise) Teile des Innenraums darstellen. Nicht zum Innenraum zählen üblicherweise Hohlräume, die nicht mit dem mindestens einen Brennraum der Verbrennungskraftmaschine verbunden sind. Dazu zählen beispielsweise Kühlkanäle für Kühlwasser; Hohlräume, die zur Gewichtsersparnis im Motorblock einer Verbrennungskraftmaschine vorgesehen sind und Ähnliches.

Bei üblichen Verbrennungskraftmaschinen ist der mindestens eine Brennraum nach Art eines Zylinders ausgeführt, in welchen jeweils ein Kolben zur Erzeugung von mechanischer Energie angeordnet ist. Diese Kolben sind über Pleuels mit einer Kurbelwelle verbunden Je nach Definition zählt zum Innenraum auch ein Kurbelgehäuse. Die Dichtigkeit des Kurbelgehäuses wird dann von der Dichtigkeitsprüfung mit erfasst. Das Kurbelgehäuse ist über die Kolbenringe (Blowby) mit dem Brennraum bzw. mit dem zu prüfenden Raum verbunden.

Der Abgasauslass ist mindestens eine definierte Querschnittsfläche, welche einen Übergang zwischen der Verbrennungskraftmaschine und einem Abgassystem bildet. In dem Bereich des Abgasauslasses (bevorzugt in der definierten Querschnittsfläche) befindet sich das Dichtungselement. Das Dichtungselement dient zum Abdichten des Innenraums, damit die Dichtigkeitsprüfung wirksam durchgeführt werden kann.

Bei dem mindestens einen Abgasauslass handelt es sich bevorzugt um eine Öffnung der Brennräume, durch die Abgas aus den Brennräumen abgeleitet werden kann. Vorzugsweise weist jeder Brennraum jeweils einen Abgasauslass auf.

In einer weiteren bevorzugten Ausführungsvariante sind alle Brennräume an ein Verbindungselement zur Ableitung der Abgase an die Umgebung angeschlossen. In diesem Fall kann der mindestens eine Abgasauslass ein (gemeinsamer) Abgasauslass der Verbrennungskraftmaschine sein, der einen Übergang zwischen zwei Teilen des Innenraums bildet. Das Verbindungselement ist beispielsweise ein Abgaskrümmer. Letztlich ist es eine reine Definitionsfrage, ob und in welchem Maße Abgasreinigungskomponenten noch als vor dem Abgasauslass angeordnete Bestandteile der Verbrennungskraftmaschine angesehen werden oder ob diese Komponenten als Bestandteile eines Abgassystems in Abgasströmungsrichtung hinter dem Abgasauslass angesehen werden.

Durch das Verschließen des mindestens einen Abgasauslasses in Schritt a) wird der Innenraum abgedichtet. Insbesondere werden durch das Verschließen Bauteile eines Abgassystems, die stromabwärts des Abgasauslasses angeordnet sind, von dem Innenraum der Verbrennungskraftmaschine abgetrennt und zählen somit nicht mehr als Teile des Innenraums.

Das Dichtungselement ist vorzugsweise so eingerichtet, den Innenraum bis zu einer Druckdifferenz von 0,2 bar an dem Abgasauslass abzudichten. Dazu ist das Dichtungselement bevorzugt so ausgebildet, dass es einer Druckdifferenz von bis zu 0,2 bar standhalten kann. Insbesondere ist es bevorzugt, dass das Dichtungselement einer Druckdifferenz von bis zu 0,5 bar standhalten kann.

Vorzugsweise ist ein einzelnes Dichtungselement derart ausgeführt, dass es bei einer Verbrennungskraftmaschine mit mehreren Abgasauslässen (beispielsweise einem Abgasauslass für jeden Brennraum der Verbrennungskraftmaschine) alle Abgasauslässe der Verbrennungskraftmaschine gemeinsam abdichten kann. Alternativ ist es bevorzugt, dass für jeden Abgasauslass, jeweils ein Dichtungselement vorgesehen ist. Bei einer Verbrennungskraftmaschine mit in Gruppen angeordneten und/oder ausgerichteten Brennräumen wie z. B. bei einem V-Motor, ist es bevorzugt, dass für jede Gruppe von Brennräumen jeweils ein Dichtungselement vorgesehen ist. Weiter Bevorzugt ist, dass das mindestens eine Dichtungselement an mindestens einer Dichtungsplatte angeordnet ist, die auf eine Mehrzahl von Abgasauslässen aufgesetzt werden kann. Dabei umfasst die Dichtungsplatte vorzugsweise für jeden abzudichtenden Abgasauslass eine Öffnung, die vorzugsweise durch eines der Dichtungselemente verschlossen ist.

Wird in Schritt b) der Innenraum mit einem Druck beaufschlagt, so wirkt dieser Druck auf alle Begrenzungen des Innenraums gleichermaßen, weil der Druck sich durch den gesamten Innenraum fortsetzt. Sollte der Innenraum an einer Stelle oder an mehreren Stellen ein Leck aufweisen, kann dies zu einer Druckreduzierung innerhalb des Innenraums führen. Eine solche Druckreduzierung kann in Schritt b) überwacht und erkannt werden. Dazu wird in Schritt b) in einer Ausführungsvariante vorzugsweise eine Druckmessung durchgeführt. In einer bevorzugten Ausführungsvariante erfolgt aber eine Messung eines Massenstroms mit deren Hilfe Undichtigkeiten erkannt werden können. Dabei wird ein Massenstrom gemessen, der in den Innenraum aus einem Druckreservoir in Folge eines Druckabfalls in dem Innenraum nachströmt. Insbesondere ist es bevorzugt, dass in Schritt b) der Druck des Innenraums mittels eines mit dem Innenraum verbundenen Druckmessinstruments gemessen wird. Bei einer Massenstrommessung erfolgt eine Massenstrommessung an einem Strömungskanal, durch den Luft aus dem Druckreservoir in den Innenraum nachfließt. Dazu wird ein Massenstromsensor eingesetzt. Es ist bevorzugt, dass eine Veränderung des Drucks über die Zeit aufgezeichnet wird, z. B. mittels einer computerkontrollierten Druckmessung oder einer computerprotokollierten Massenstrommessung. In Schritt b) wird vorzugsweise ein Druck im Bereich von 1,1 - 1,3 bar (absoluter Druck inklusive atmosphärischem Druck) verwendet. Vorzugsweise wird in Schritt b) Luft als Medium für die Dichtigkeitsprüfung verwendet. Das Beaufschlagen des Innenraums mit dem Druck erfolgt vorzugsweise mittels einer mit dem Innenraum verbundenen Druckluftquelle, insbesondere mittels eines externen befüllten Behälter mit definiertem Druck und Volumen.

In Schritt c) wird vorzugsweise mindestens eine Gasdurchlassöffnung in dem Dichtungselement geschaffen. Alternativ ist es bevorzugt, dass das Dichtungselement vollständig entfernt wird. Dies kann beispielsweise dadurch erfolgen, dass ein als Dichtungsplatte ausgebildetes Dichtungselement entfernt wird. Die Entfernung des Dichtungselementes erfolgt so, dass nach der Durchführung von Schritt c) alle Abgasauslässe vollständig geöffnet sind. Dies ist vorteilhaft, weil ein nicht vollständig geöffneter Abgasauslass den ordnungsgemäßen Betrieb der Verbrennungskraftmaschine behindert.

In einer weiteren Ausführungsform des Verfahrens ist das Dichtungselement eine Dichtfolie.

In einer weiteren Ausführungsform des Verfahrens ist das Dichtungselement derart eingerichtet, dass es bei Überschreitung eines Grenzdrucks zerstört wird.

Die Zerstörbarkeit des Dichtungselements bei Überschreitung des Grenzdrucks wird vorzugsweise durch eine an den Grenzdruck angepasste Dicke und/oder Wahl des Materials des Dichtungselements bzw. der Dichtfolie realisiert. Bevorzugt erfolgt die Zerstörung des Dichtungselementes durch ein Zerreißen des Dichtungselementes. Die Überschreitung des Grenzdrucks kann insbesondere durch auftretendes Abgas an dem Abgasauslass stattfinden. In diesem Fall kann das Dichtungselement bei der Montage der Verbrennungskraftmaschine montiert werden, die Dichtigkeitsprüfung nach Schritt b) durchgeführt werden und Schritt c) wird durch die erste Inbetriebnahme der Verbrennungskraftmaschine automatisch durchgeführt, ohne dass eine Einleitung von Schritt c) explizit erfolgen muss.

In einer weiteren Ausführungsform des Verfahrens ist das Dichtungselement derart eingerichtet, dass es sich bei einer Überschreitung einer Grenztemperatur thermisch zersetzt.

Das Dichtungselement bzw. die Dichtfolie ist bevorzugt mit einem Material gebildet, das auf die Grenztemperatur abgestimmte thermische Eigenschaften hat. Aufgrund der Tatsache, dass aus den Brennräumen austretendes Abgas eine gegenüber der Umgebung erhöhte Temperatur aufweist, kann das thermische Zersetzen des Dichtungselements insbesondere durch Abgas der Verbrennungskraftmaschine bewirkt werden. Gegenüber den bei der Dichtigkeitsprüfung auftretenden Temperaturen sind die bei der Dichtigkeitsprüfung in Schritt b) auftretenden Temperaturen gering, so dass das Dichtungselement während Schritt b) nicht zersetzt wird. Ähnlich zu der oben beschriebenen Ausführungsform des Verfahrens, bei der eine Überschreitung des Grenzdrucks zu dem Zerreißen der Dichtfolie führt, kann auch in dieser Ausführungsform des Verfahrens die erstmalige Inbetriebnahme der Verbrennungskraftmaschine für das Durchführen von Schritt c) ausreichen.

Sowohl beim Zerstören des Dichtungselements durch Überschreiten des Grenzdrucks, als auch beim thermischen Zersetzen des Dichtungselements durch Überschreiten der Grenztemperatur ist es bevorzugt, dass das Dichtungselement rückstandsfrei entfernt wird. Auch eine Kombination der beiden Möglichkeiten (druckabhängige Zerstörung und thermische Zersetzung) ist denkbar. So kann beispielsweise das Überschreiten des Grenzdrucks eine erste Gasdurchlassöffnung (z. B. einen Riss) in dem Dichtungselement verursachen und das durch diesen strömende heiße Abgas das Dichtungselement thermisch zersetzen. Insbesondere ist es bevorzugt, wenn das Dichtungselement restlos (rückstandsfrei) thermisch zersetzt werden kann.

In einer weiteren Ausführungsform des Verfahrens ist das Dichtungselement zumindest teilweise mit Polyethylen gebildet.

Das Dichtungselement aus Polyethylen ist vorzugsweise eine Dichtfolie. Diese Dichtfolie hat vorzugsweise eine Foliendicke im Bereich von 10 µm bis 500 µm [Mikrometer], insbesondere im Bereich von 100 µm bis 300 µm, beispielsweise 200 µm.

Ein mit Polyethylen gebildetes Dichtungselement kann wie oben beschrieben durch Überschreiten des Grenzdrucks zerreißen und/oder durch Überschreitung der Grenztemperatur thermisch zersetzt werden. Polyethylen hat zudem den Vorteil, dass durch Materialzusätze die thermischen und die mechanischen Eigenschaften beeinflusst und damit an die gewünschte Grenztemperatur bzw. den gewünschten Grenzdruck angepasst werden können. Vorzugsweise ist das Dichtungselement vollständig aus Polyethylen gebildet. Ein Dichtungselement aus Polyethylen kann in der Verbrennungskraftmaschine bzw. in dem Abgassystem darüber hinaus rückstandsfrei thermisch zersetzt werden.

Erfindungsgemäß, wird das Verschließen des Abgasauslasses in Schritt a) durch Einlegen des Dichtungselements zwischen einem Block der Verbrennungskraftmaschine und einem Abgaskrümmer bei einer Montage der Verbrennungskraftmaschine durchgeführt.

Bei der Montage einer Verbrennungskraftmaschine mit einer Mehrzahl von Abgasauslässen bevorzugt eine Dichtfolie zwischen einem Block der Verbrennungskraftmaschine und einem Abgaskrümmer eingesetzt. Es ist auch möglich, dass eine eigens hierfür vorgesehene Dichtungsplatte eingesetzt wird, in welcher (bevorzugt als Dichtfolien ausgeführte) Dichtungselemente vorgesehen und derart angeordnet sind, dass diese bei der Montage der Dichtungsplatte an den Abgasauslässen positioniert werden.

Bei dem Block der Verbrennungskraftmaschine handelt es sich bevorzugt um ein Kurbelgehäuse. Der mindestens eine Abgasauslass ist vorzugsweise als eine Auslassöffnung des Blocks ausgeführt. Der Abgaskrümmer ist vorzugsweise mit einem Abgasturbolader verbunden. Vorzugsweise ist der Abgaskrümmer dazu eingerichtet, mit allen Abgasauslässen der Verbrennungskraftmaschine verbunden werden zu können. Alternativ ist es bevorzugt, dass der Abgaskrümmer einen Teil der Abgasauslässe miteinander verbinden kann. In dem Fall ist es bevorzugt, dass mehrere Abgaskrümmer vorgesehen sind, so dass jeder der Abgasauslässe jeweils an einen der Abgaskrümmer angebunden werden kann.

Wird das Dichtungselement bei der Montage der Verbrennungskraftmaschine montiert und ist es dazu eingerichtet, bei einer ersten Inbetriebnahme der Verbrennungskraftmaschine geöffnet zu werden, insbesondere durch die oben beschriebene Überschreitung des Grenzdrucks bzw. die Überschreitung der Grenztemperatur, so muss das Dichtungselement nicht durch einen zusätzlichen Montageschritt nach der Dichtungsprüfung entfernt werden. Dadurch können Kosten eingespart werden.

Ist das mindestens eine Dichtungselement an einer Dichtungsplatte angeordnet, ist es insbesondere bevorzugt, dass die Dichtungsplatte über eine Schraubverbindung mit dem Block in Verbindung gebracht werden kann. Dabei wird vorzugsweise eine Schraubverbindung verwendet, die zugleich den Block z. B. mit dem Abgaskrümmer verbinden kann.

In einer weiteren Ausführungsform des Verfahrens erfolgt das Öffnen des Abgasauslasses in Schritt c) bei einer ersten Inbetriebnahme der Verbrennungskraftmaschine durch ein Auftreten von Abgas an dem mindestens einen Abgasauslass.

Aufgrund der Tatsache, dass das Abgas eine gegenüber der Umgebung erhöhte Temperatur und einen erhöhten Druck aufweist, kann nach dieser Ausführungsform das Dichtungselement gemäß den beiden oben beschriebenen Möglichkeiten (dem Überschreiten der Grenztemperatur und dem Überschreiten des Grenzdrucks) geöffnet und/oder zersetzt werden. Beide Bedingungen (die Überschreitung einer Grenztemperatur und die Überschreitung eines Grenzdrucks) treten bei Inbetriebnahme der Verbrennungskraftmaschine üblicherweise auf.

Das Verfahren zur Dichtigkeitsprüfung wurde vorstehend anhand des Abgasauslasses einer Verbrennungskraftmaschine erläutert. Das Verfahren ist aber entsprechend auch für einen Einlass für Ansaugluft einer Verbrennungskraftmaschine anwendbar. Vorzugsweise wird in Schritt a) zusätzlich zum Abgasauslass (4) ein Einlass für Ansaugluft mit einem Dichtungselement verschlossen, welches dem Dichtungselement zum verschließen des Abgasauslasses entspricht. Die Dichtigkeitsprüfung in Schritt b) kann genauso wie weiter oben beschrieben erfolgen. In Schritt c) erfolgt zusätzlich zum Öffnen des Abgasauslasses die Öffnung des Einlasses für Ansaugluft.

Weiterhin wird eine Verbrennungskraftmaschine vorgestellt mit einem Innenraum umfassend mindestens einen Brennraum und mindestens einen Abgasauslass, der mit mindestens einem Dichtungselement verschlossen ist, welches sich bei einer ersten Inbetriebnahme der Verbrennungskraftmaschine auflöst. Dabei ist das Dichtungselemente zum Verschließen des Abgasauslasses zwischen einem Block der Verbrennungskraftmaschine und einem Abgaskrümmer der Verbrennungskraftmaschine montiert.

Die Verbrennungskraftmaschine ist dazu eingerichtet, nach einem der oben beschriebenen Verfahren auf Dichtigkeit geprüft zu werden. Die für das Verfahren weiter oben beschriebenen besonderen Vorteile und Ausgestaltungsmerkmale sind auf die beschriebene Verbrennungskraftmaschine anwendbar und übertragbar. Gleiches gilt für die im Folgenden beschriebenen besonderen Vorteile und Ausgestaltungsmerkmale der Verbrennungskraftmaschine, die auf das beschriebene Verfahren anwendbar und übertragbar sind.

In einer weiteren Ausführungsform der Verbrennungskraftmaschine ist an den Abgasauslass ein Abgasturbolader angeschlossen.

Dieser Abgasturbolader ist bevorzugt Bestandteil eines Abgassystems, welches an den mindestens einen Abgasauslass der Verbrennungskraftmaschine angeschlossen ist. Es ist bevorzugt, dass insbesondere der Abgasturbolader durch das Dichtungselement von dem Innenraum der Verbrennungskraftmaschine getrennt wird. Dies hat wie oben beschrieben den Vorteil, dass auf eine Dichtigkeit des Abgasturboladers verzichtet werden kann, um die Dichtigkeit der Verbrennungskraftmaschine bzw. des Innenraums zu prüfen. Üblicherweise existieren in einem Abgasturbolader Undichtigkeiten, die für den Betrieb der Verbrennungskraftmaschine nicht relevant sind, die jedoch bei einer Dichtigkeitsprüfung als problematische Undichtigkeiten identifiziert werden, wenn keine (zusätzliche) Abdichtung des

Turboladers erfolgt. Eine solche (zusätzliche) Abdichtung des Turboladers wird durch das beschriebene Verfahren und die beschriebene Verbrennungskraftmaschine obsolet.

Die Erfindung findet vorzugsweise Einsatz in einem Kraftfahrzeug mit einer Verbrennungskraftmaschine, die wie oben beschrieben ausgeführt ist oder zur Durchführung des beschriebenen Verfahrens eingerichtet ist.

Die Erfindung und das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine schematische Darstellung eines Kraftfahrzeugs mit einer Verbrennungskraftmaschine mit einem durch ein Dichtungselement begrenzbaren Innenraum,
- Fig. 2:: eine schematische perspektivische Darstellung einer Dichtungsplatte,
- Fig. 3:: eine weitere schematische perspektivische Darstellung der Dichtungsplatte aus Fig. 2,
- Fig. 4:: eine schematische Darstellung der Dichtungsplatte aus den Fig. 2 und 3 mit Dichtungselementen.

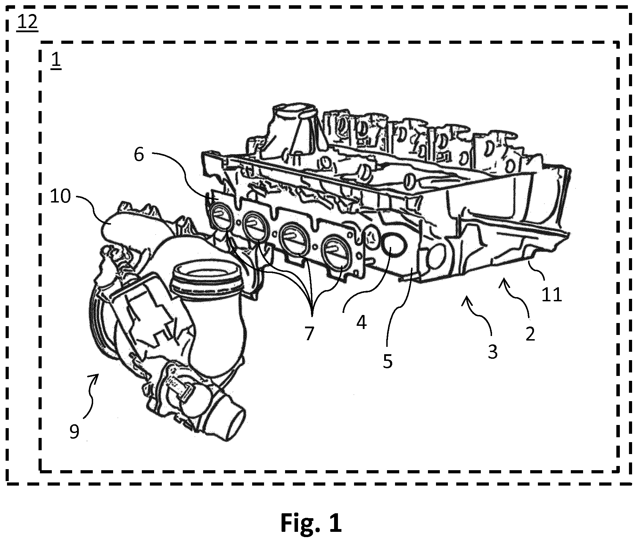

In Fig. 1 ist ein Kraftfahrzeug 12 mit einer Verbrennungskraftmaschine 1 dargestellt. Die Verbrennungskraftmaschine 1 umfasst einen (hier nur teilweise dargestellten) Block 11 mit einem (ebenso nur teilweise dargestellten) Innenraum 2, der insbesondere vier Brennräume 3 sowie weitere, nicht dargestellte Bauteile und Leitungen umfasst. Jeder der Brennräume 3 weist jeweils einen Abgasauslass 4 auf. An einer Abgasauslassseite 5 des Blocks 11 kann eine Dichtungsplatte 6 montiert werden. Die Dichtungsplatte 6 weist für jeden der Abgasauslässe 4 eine Öffnung 7 auf. Jeder der Öffnungen 7 kann durch jeweils ein (hier nicht gezeigtes) Dichtungselement verschlossen werden. An die Abgasauslassseite 5 kann ein Abgaskrümmer 10 montiert werden, der an einen Abgasturbolader 9 angebunden ist. Die Dichtungsplatte 6 ist nach der Montage des Abgaskrümmers 10 zwischen der Abgasauslassseite 5 des Blocks 11 und dem Abgaskrümmer 10 des Turboladers 9 eingelegt. Insbesondere sofern die Öffnungen 7 der Dichtungsplatte 6 durch Dichtungselemente verschlossen sind, sind insbesondere der Abgasturbolader 9 und der Abgaskrümmer 10 keine Bestandteile des Innenraums 2 der Verbrennungskraftmaschine 1.

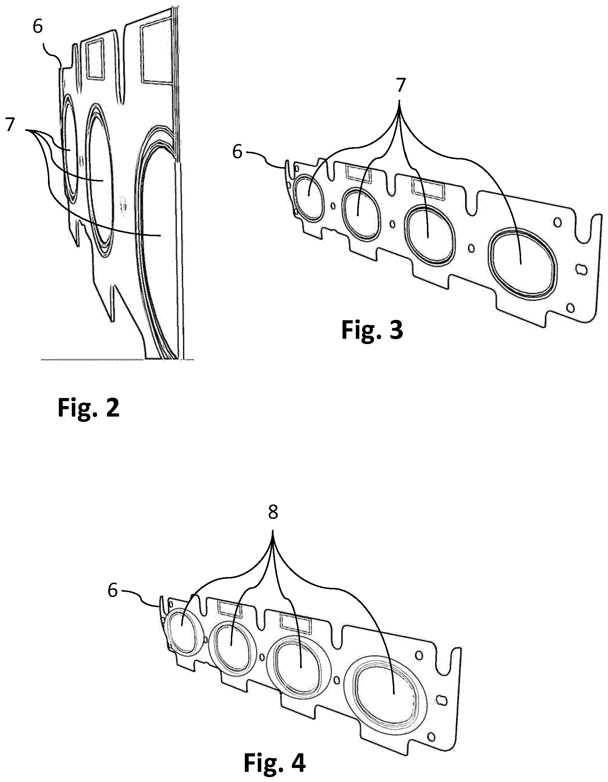

Fig. 2 zeigt einen Teil einer Dichtungsplatte 6. In die Dichtungsplatte 6 sind Öffnungen 7 integriert, wobei nach einer Montage der Dichtungsplatte 6 jede der Öffnungen 7 einem (hier nicht gezeigten) Abgasauslass gegenüberliegt. In der gezeigten Darstellung sind die Öffnungen 7 nicht von Dichtungselementen verschlossen.

In Fig. 3 ist die Dichtungsplatte 6 aus Fig. 2 vollständig und in einer anderen perspektivischen Darstellung gezeigt. Auch hier sind die Öffnungen 7 zu erkennen. In dieser Darstellung sind die Öffnungen 7 nicht von Dichtungselementen verschlossen.

In Fig. 4 ist die in den zuvor gezeigten Figuren dargestellte Dichtungsplatte 6 gezeigt. Hier ist jede der Öffnungen 7 mit jeweils einem Dichtungselement 8 verschlossen. Die Dichtungselemente 8 sind als Dichtfolien ausgeführt. Die gezeigte Darstellung ist auf einen Zustand bezogen, der vor einer ersten Inbetriebnahme einer Verbrennungskraftmaschine vorliegt. Die Dichtungselemente werden bei der ersten Inbetriebnahme der Verbrennungskraftmaschine vollständig thermisch zersetzt und/oder durch einen auftretenden Druck zerstört. Nach der ersten Inbetriebnahme der Verbrennungskraftmaschine befindet sich die Dichtungsplatte 6 in dem in Fig. 3 dargestellten Zustand ohne Dichtungselemente 8.

### Bezugszeichenliste

- 1: Verbrennungskraftmaschine
- 2: Innenraum
- 3: Brennraum
- 4: Abgasauslass
- 5: Abgasauslassseite
- 6: Dichtungsplatte
- 7: Öffnung
- 8: Dichtungselement
- 9: Abgasturbolader
- 10: Abgaskrümmer
- 11: Block
- 12: Kraftfahrzeug

## Patentansprüche

1. Verfahren zur Dichtigkeitsprüfung einer Verbrennungskraftmaschine (1) mit einem Innenraum (2) umfassend mindestens einen Brennraum (3) und mindestens einen Abgasauslass (4) aufweisend zumindest die folgenden Schritte:
a) Verschließen des mindestens einen Abgasauslasses (4) mit einem Dichtungselement (8),
b) Beaufschlagen des Innenraums (2) mit einem Druck zur Durchführung einer Dichtigkeitsprüfung der Verbrennungskraftmaschine (1), und
c) Öffnen des Abgasauslasses (4) zur Inbetriebnahme der Verbrennungskraftmaschine (1);
**dadurch gekennzeichnet, dass** das Verschließen des Abgasauslasses in Schritt a) durch Einlegen des Dichtungselementes zwischen einem Block (11) der Verbrennungskraftmaschine (1) und einem Abgaskrümmer (10) bei einer Montage der Verbrennungskraftmaschine (1) durchgeführt wird.

2. Verfahren nach Anspruch 1, wobei das Dichtungselement (8) eine Dichtfolie ist.

3. Verfahren nach Anspruch 1 oder 2, wobei das Dichtungselement (8) derart eingerichtet ist, dass es bei Überschreitung eines Grenzdrucks zerreißt.

4. Verfahren nach einem der vorhergehenden Ansprüche, wobei das Dichtungselement (8) derart eingerichtet ist, dass es sich bei Überschreitung einer Grenztemperatur thermisch zersetzt.

5. Verfahren nach einem der vorhergehenden Ansprüche, wobei das Dichtungselement (8) zumindest teilweise mit Polyethylen gebildet ist.

6. Verfahren nach einem der vorhergehenden Ansprüche, wobei das Öffnen des Abgasauslasses (4) in Schritt c) bei einer ersten Inbetriebnahme der Verbrennungskraftmaschine (1) durch ein Auftreten von Abgas an dem mindestens einen Abgasauslass (4) erfolgt.

7. Verbrennungskraftmaschine (1) mit einem Innenraum (2) umfassend mindestens einen Brennraum (3) und mindestens einen Abgasauslass (4), der mit einem Dichtungselement (8) verschlossen ist, welches sich bei einer ersten Inbetriebnahme der Verbrennungskraftmaschine (1) auflöst, **dadurch gekennzeichnet, dass** das Dichtungselemente (8) zum Verschließen des Abgasauslasses (4) zwischen einem Block (11) der Verbrennungskraftmaschine (1) und einem Abgaskrümmer (10) der Verbrennungskraftmaschine (1) montiert ist.

8. Verbrennungskraftmaschine (1) nach Anspruch 7, wobei an den Abgasauslass (4) ein Abgasturbolader (9) angeschlossen ist.

9. Kraftfahrzeug (12) mit einer Verbrennungskraftmaschine (1) gemäß einem der Ansprüche 7 oder 8.

## Claims

1. A method for leak testing an internal combustion engine (1) with an interior (2) comprising at least one combustion chamber (3) and at least one exhaust outlet (4), having at least the following steps:
a) closing the at least one exhaust outlet (4) with a seal element (8),
b) applying a pressure to the interior (2) for performing a leak test on the internal combustion engine (1), and
c) opening the exhaust outlet (4) to start up the internal combustion engine (1);
**characterised in that** the closing of the exhaust outlet in step a) is carried out by placing the seal element between a block (11) of the internal combustion engine (1) and an exhaust manifold (10) when assembling the internal combustion engine (1).

2. A method according to Claim 1, wherein the seal element (8) is a sealing film.

3. A method according to Claim 1 or Claim 2, wherein the seal element (8) is set up in such a way that it tears if a limit pressure is exceeded.

4. A method according to one of the preceding claims, wherein the seal element (8) is set up in such a way that it thermally decomposes if a limit temperature is exceeded.

5. A method according to one of the preceding claims, wherein the seal element (8) is formed at least partially with polyethylene.

6. A method according to one of the preceding claims, wherein the opening of the exhaust outlet (4) in step c) takes place upon first starting-up the internal combustion engine (1) by the arrival of exhaust gas at the at least one exhaust outlet (4).

7. An internal combustion engine (1) with an interior (2) comprising at least one combustion chamber (3) and at least one exhaust outlet (4) which is closed with a seal element (8) which dissolves upon first starting-up the internal combustion engine (1), **characterised in that** the seal element (8) for closing the exhaust outlet (4) is mounted between a block (11) of the internal combustion engine (1) and an exhaust manifold (10) of the internal combustion engine (1).

8. An internal combustion engine (1) according to Claim 7, wherein an exhaust turbocharger (9) is connected to the exhaust outlet (4).

9. A motor vehicle (12) with an internal combustion engine (1) according to one of Claims 7 or 8.

## Revendications

1. Dispositif de contrôle de l'étanchéité d'un moteur à combustion interne (1) ayant un volume interne (2) comportant au moins une chambre de combustion (3) et au moins une sortie (4) des gaz d'échappement comprenant les étapes suivantes consistant à :
a) fermer la sortie des gaz d'échappement (4) avec un élément d'étanchéité (8),
b) alimenter en pression le volume interne (2) pour effectuer un contrôle de l'étanchéité du moteur à combustion interne (1), et
c) ouvrir la sortie des gaz d'échappement (4) pour mettre en service le moteur à combustion interne (1),
**caractérisé en ce que**
la fermeture de la sortie des gaz d'échappement lors de l'étape a) est effectuée par insertion de l'élément d'étanchéité entre un bloc (11) du moteur à combustion interne (1) et un collecteur d'échappement (10) lors du montage du moteur à combustion interne (1).

2. Procédé conforme à la revendication 1,
selon lequel l'élément d'étanchéité (8) est un film d'étanchéité.

3. Procédé conforme à la revendication 1 ou 2,
selon lequel l'élément d'étanchéité (8) est réalisé de sorte qu'il se déchire en cas de dépassement d'une pression limite.

4. Procédé conforme à l'une des revendications précédentes,
selon lequel l'élément d'étanchéité (8) est réalisé de sorte qu'il se décompose thermiquement en cas de dépassement d'une température limite.

5. Procédé conforme à l'une des revendications précédentes,
selon lequel l'élément d'étanchéité (8) est réalisé au moins partiellement en polyéthylène.

6. Procédé conforme à l'une des revendications précédentes,
selon lequel l'ouverture de la sortie des gaz d'échappement (4) lors de l'étape c) est effectuée lors d'une première mise en service du moteur à combustion interne (1) par un transfert de gaz d'échappement au niveau de la sortie des gaz d'échappement (4).

7. Moteur à combustion interne (1) ayant un volume interne (2) comprenant au moins une chambre de combustion (3) et au moins une sortie des gaz d'échappement (4) qui est fermée par un élément d'étanchéité (8) qui se désagrège lors d'une première mise en service du moteur à combustion interne (1),
**caractérisé en ce que**
l'élément d'étanchéité (8) est monté entre un bloc (11) du moteur à combustion interne (1) et un collecteur d'échappement (10) de ce moteur à combustion interne (1) pour permettre de fermer la sortie des gaz d'échappement (4).

8. Moteur à combustion interne (1) conforme à la revendication 7, dans lequel un turbocompresseur (9) est connecté sur la sortie des gaz d'échappement (4).

9. Véhicule automobile (12) équipé d'un moteur à combustion interne (1) conforme à l'une des revendications 7 et 8.
